# EUROPÄISCHE PATENTANMELDUNG

(11) **EP 3 018 338 A1**
(43) Veröffentlichungstag der Anmeldung: **11.05.2016**
(21) Anmeldenummer: 15190132.9
(22) Anmeldetag: 16.10.2015
(51) Int. Cl.: F02M 57/00, G01L 9/00, G01L 19/14

(54) **KRAFTSTOFFINJEKTOR UND VERFAHREN ZUM HERSTELLEN EINES KRAFTSTOFFINJEKTORS**

(30) Priorität: 07.11.2014 DE 102014222808
(71) Anmelder: ROBERT BOSCH GMBH, 70442 Stuttgart (DE)
(72) Erfinder: Dirscherl, Florian, 96120 Bischberg (DE); Melcher, Reinhold, 91077 Neunkirchen A. Brand (DE); Rapp, Holger, 71254 Ditzingen (DE); Cromme, Peter, 96050 Bamberg (DE)

(57) **Zusammenfassung**

Die Erfindung betrifft einen Kraftstoffinjektor (10), insbesondere Common-Rail-Injektor, mit einem Injektorgehäuse (11), in dem ein Hochdruckraum (15) ausgebildet ist, der über eine im Injektorgehäuse (11) angeordnete Versorgungsbohrung (19) mit unter Druck stehendem Kraftstoff versorgbar ist, mit wenigstens einer zumindest mittelbar mit dem Hochdruckraum (15) verbundenen, im Injektorgehäuse (11) ausgebildeten Einspritzöffnung (12) zum Einspritzen von Kraftstoff in den Brennraum einer Brennkraftmaschine, mit einem die wenigstens eine Einspritzöffnung (12) freigebenden oder verschließenden Einspritzglied (16), und mit einer Messeinrichtung (30) zur zumindest mittelbaren Erfassung des Drucks im Hochdruckraum (15) oder der Versorgungsbohrung (19), wobei die Messeinrichtung (30) dazu ausgebildet ist, eine elastische Verformung eines zumindest mittelbar mit der Versorgungsbohrung (19) oder dem Hochdruckraum (15) in Wirkverbindung angeordneten Verformungsbereichs (27) zu erfassen, wobei die Messeinrichtung (30) ein Sensorelement (32) aufweist, das mittels einer stoffschlüssigen Verbindung (35) mit dem Verformungsbereich (27) verbunden ist, und wobei das Sensorelement (32) dazu ausgebildet ist, in dem Verformungsbereich (27) auftretende Zug- oder Druckspannungen zu detektieren. Erfindungsgemäß ist es vorgesehen, dass die stoffschlüssige Verbindung (35) dazu ausgebildet ist, dass bei deren Herstellung das Sensorelement (32) zumindest im Bereich einer Verbindungsfläche (36) und der Kraftstoffinjektor (10) zumindest im Verformungsbereich (27) auf eine gegenüber der Umgebungstemperatur erhöhte Temperatur erwärmbar sind.

## Beschreibung

### Stand der Technik

Die Erfindung betrifft einen Kraftstoffinjektor, insbesondere einen Common-Rail-Injektor, nach dem Oberbegriff des Anspruchs 1. Ferner betrifft die Erfindung ein Verfahren zum Herstellen eines Kraftstoffinjektors nach dem Oberbegriff des unabhängigen Verfahrensanspruchs.

Ein Kraftstoffinjektor nach dem Oberbegriff des Anspruchs 1 sowie ein Verfahren zum Herstellen eines Kraftstoffinjektors nach dem Oberbegriff des unabhängigen Verfahrensanspruchs sind aus der nachveröffentlichten DE 10 2014 209330 A1 der Anmelderin bekannt. Bei dem bekannten Kraftstoffinjektor wird insbesondere zur Erkennung des Zeitpunkts des Schließens der Düsennadel, bei dem diese auf ihren Sitz im Injektorgehäuse auftrifft und dadurch im Injektorgehäuse ausgebildete Einspritzöffnung zumindest mittelbar verschließt, eine Messeinrichtung mit einem Sensorelement verwendet, das im Bereich einer Versorgungsbohrung am Injektorgehäuse angeordnet ist. Die Versorgungsbohrung versorgt einen Hochdruckraum, in dem auch die Düsennadel angeordnet ist, mit unter Hochdruck stehendem Kraftstoff. Insbesondere weist das Injektorgehäuse im Bereich der Messeinrichtung einen Verformungsbereich auf, der in Abhängigkeit des Kraftstoffdrucks in der Versorgungsbohrung elastisch deformierbar ausgebildet ist. Bei einer Druckerhöhung in der Versorgungsbohrung wölbt sich der Verformungsbereich nach außen hin, was mittels des Sensorelements detektierbar ist. Das Sensorelement ist mittels einer Klebeverbindung mit dem Verformungsbereich verbunden und dazu ausgebildet, in dem Kontaktbereich zum Injektorgehäuse auftretende Dehnungen bzw. Zugspannungen zu erfassen, wobei die Größe bzw. Höhe der Dehnungen in Abhängigkeit von dem Druck in der Versorgungsbohrung ist. Charakteristisch beim angesprochenen Verschließen der Einspritzöffnungen durch die Düsennadel ist es, dass dadurch ein (relativ starker bzw. schneller) Druckanstieg in der Versorgungsleitung stattfindet, da kein Kraftstoff mehr über die Einspritzöffnungen abgegeben wird, wobei der Druckanstieg mittels des Sensorelements erfasst wird.

Während des Betriebs der Brennkraftmaschine weist diese gegenüber der Umgebungstemperatur eine erhöhte Betriebstemperatur auf, die sich über das Injektorgehäuse des Kraftstoffinjektors auch auf den Bereich der Messeinrichtung überträgt, selbst wenn die Messeinrichtung in einem relativ brennraumfernen Bereich des Kraftstoffinjektors angeordnet ist. Bei dem Kraftstoffinjektor nach dem Oberbegriff des Anspruchs 1 erfolgt das Verkleben des Sensorelements mit dem Verformungsbereich während der Fertigung des Kraftstoffinjektors bei üblichen Raumtemperaturen von beispielsweise etwa 20°C. Wird nun ein derartiger Kraftstoffinjektor in einer Brennkraftmaschine bei Betriebstemperatur betrieben, so dehnen sich der Kraftstoffinjektor im Bereich des Verformungsbereichs und das Sensorelement sowie der Klebstoff aufgrund der Wärmeausdehnungskoeffizienten der angesprochenen Elemente bereits ohne Vorhandensein eines Kraftstoffdrucks beispielsweise in der Versorgungsbohrung aus, so dass über die Klebeverbindung in dem Sensorelement Dehnungen bzw. Zugspannungen erzeugt werden, obwohl der Verformungsbereich des Kraftstoffinjektors noch keiner Deformation bzw. Verformung aufgrund des Kraftstoffdrucks unterworfen ist. Diese Spannungen wirken sich im Idealfalls während des Betriebs auf das Sensorsignal nicht aus, oder aber sie können bei der Auswertung der Daten des Sensorelements durch einen entsprechenden Auswertealgorithmus berücksichtigt werden. Die während des Betriebs insbesondere in dem Sensorelement sowie der Klebstoffmasse auftretenden Spannungen sind jedoch relativ hoch, da sich diese sowohl aus den Spannungen hervorgerufen durch die Betriebstemperatur bzw. der Ausdehnung der Bauteile, als auch aus den Spannungen hervorgerufen durch den Kraftstoffdruck zusammensetzen. Derartige, relativ hohe Dehnungen bzw. Zugspannungen sind sowohl für die Lebensdauer der Klebeverbindung als auch für die Lebensdauer des Sensorelements als kritisch zu bewerten.

### Offenbarung der Erfindung

Ausgehend von dem dargestellten Stand der Technik liegt der Erfindung die Aufgabe zugrunde, einen Kraftstoffinjektor, insbesondere einen Common-Rail-Injektor, nach dem Oberbegriff des Anspruchs 1 sowie ein Verfahren zum Herstellen eines Kraftstoffinjektors nach dem Oberbegriff des unabhängigen Verfahrensanspruchs derart weiterzubilden, dass die mittels des Sensorelements erfassten Dehnungen bzw. Zugspannungen gegenüber dem Stand der Technik, insbesondere während des Betriebs der Brennkraftmaschine bei Betriebstemperatur, herabgesetzt sind. Dadurch soll die Verbindung zwischen den Bauteilen über die Betriebsdauer des Kraftstoffinjektors betrachtet bessere Eigenschaften aufweisen und das Sensorelement geringeren Belastungen ausgesetzt sein.

Diese Aufgabe wird bei einem Kraftstoffinjektor, insbesondere einem Common-Rail-Injektor, mit den kennzeichnenden Merkmalen des Anspruchs 1 dadurch gelöst, dass die stoffschlüssige Verbindung dazu ausgebildet ist, dass bei deren Herstellung das Sensorelement zumindest im Bereich einer Verbindungsfläche und der Kraftstoffinjektor zumindest im Verformungsbereich auf eine gegenüber der Umgebungstemperatur erhöhte Temperatur erwärmbar sind.

Dadurch wird bewirkt, dass die Bauteile im Verbindungsbereich zwischen dem Sensorelement und dem Injektorgehäuse aufgrund der Wärmeausdehnungskoeffizienten der Bauteile gegenüber der Raumtemperatur vergrößert ausgebildet sind. Eine derartige Ausbildung des Kraftstoffinjektors bewirkt, dass bei der erwähnten erhöhten Temperatur mittels des Sensorelements keine Dehnungen bzw. Zugspannungen in das Sensorelement eingebracht werden, die Bauteile somit spannungsfrei sind. Bei einer nach der Fertigung stattfindenden Abkühlung des Kraftstoffinjektors kommt es aufgrund der Schrumpfung der Bauteile zu Druckeigenspannungen in der Klebestelle und im Sensor, die den im Betrieb des Kraftstoffinjektors in der Brennkraftmaschine auftretenden Dehnungen bzw. Zugspannungen in dem Sensorelement entgegenwirken und diese so abschwächen. Dadurch wird der Vorteil erzielt, dass die maximal auftretenden Dehnungen bzw. Zugspannungen gegenüber dem Stand der Technik reduziert sind. Ergänzend wird erwähnt, dass der Erfindungsgedanke nicht nur bei den eingangs erwähnten Verbindungen zwischen dem Verformungsbereich und dem Sensorelement über eine Klebeverbindung anwendbar ist, sondern grundsätzlich bei allen stoffschlüssigen Verbindungen zwischen dem Sensorelement und dem Kraftstoffinjektor. Vorteilhafte Weiterbildungen des erfindungsgemäßen Kraftstoffinjektors sind in den Unteransprüchen aufgeführt.

In einer besonders bevorzugten Ausgestaltung der stoffschlüssigen Verbindung ist diese als Klebeverbindung unter Verwendung eines warmaushärtenden Klebstoffs ausgebildet. Ein derartiger Klebstoff ist besonders vorteilhaft, da er bei den üblichen Betriebstemperaturen eine besonders hohe Festigkeit der Verbindungsstelle zwischen dem Kraftstoffinjektor und dem Sensorelement ermöglicht.

Wie bereits erwähnt, ist die stoffschlüssige Verbindung zwischen dem Verformungsbereich des Kraftstoffinjektors und dem Sensorelement nicht auf Klebeverbindungen beschränkt. So ist es in alternativer Ausgestaltung der stoffschlüssigen Verbindung vorgesehen, dass diese als Löt- oder Schweißverbindung ausgebildet ist.

Um eine bestmögliche Verbindung zwischen dem Kraftstoffinjektor im Bereich des Verformungsbereichs und dem Sensorelement zu ermöglichen, ist es besonders bevorzugt vorgesehen, dass der Verformungsbereich und das Sensorelement im Bereich der stoffschlüssigen Verbindung jeweils eben ausgebildet sind.

Besonders bevorzugt ist darüber hinaus eine Anordnung des Verformungsbereichs im Bereich der Versorgungsbohrung oder eines mit der Versorgungsbohrung in Wirkverbindung angeordneten Abzweigs. Beide Anordnungen haben den Vorteil, dass sie eine relativ brennraumferne Anordnung des Sensorelements bzw. der Messeinrichtung ermöglichen, so dass die dort während des Betriebs auftretenden Temperaturen, gegenüber einem brennraumnahen Anbauort, reduziert sind. Darüber hinaus ist es bei Verwendung eines Abzweigs, der mit der Versorgungsbohrung in Wirkverbindung angeordnet ist, möglich, das Sensorelement in Umfangsrichtung des Kraftstoffinjektors betrachtet an nahezu jeden beliebigen Ort anzuordnen, um damit ggf. der Einbausituation des Kraftstoffinjektors in der Brennkraftmaschine berücksichtigen zu können.

Weiterhin wird erwähnt, dass die erfindungswesentliche Idee zur Reduzierung der Dehnungen bzw. Zugspannungen, die von dem Sensorelement erfasst werden, auf unterschiedliche Arten von Sensorelementen anwendbar ist. Besonders bevorzugt sind jedoch Sensorelemente, die als Piezoelement ausgebildet sind oder zumindest einen Dehnmessstreifen aufweisen.

Besonders einfach lässt sich der Verformungsbereich am Injektorgehäuse dadurch ausbilden, dass dieser im Bereich einer sacklochförmigen Vertiefung oder einer Abflachung angeordnet ist.

Die Erfindung umfasst auch ein Verfahren zum Herstellen eines Kraftstoffinjektors, insbesondere eines soweit beschriebenen erfindungsgemäßen Kraftstoffinjektors, bei dem ein Injektorgehäuse in einem sich in Abhängigkeit eines Kraftstoffdrucks elastisch verformenden Verformungsbereich mittels einer stoffschlüssigen Verbindung mit einem Sensorelement verbunden wird, wobei das Sensorelement dazu ausgebildet ist, im Verformungsbereich auftretende Zug- oder Druckspannungen zu erfassen. Erfindungsgemäß zeichnet sich das Verfahren dadurch aus, dass bei der Ausbildung der stoffschlüssigen Verbindung der Kraftstoffinjektor zumindest im Verformungsbereich und das Sensorelement zumindest auf der dem Verformungsbereich zugewandten Seite im Bereich einer Verbindungsfläche vorab auf eine gegenüber der Umgebungstemperatur erhöhte Temperatur erwärmt werden.

Um bei den Betriebstemperaturen des Kraftstoffinjektors den Effekt der reduzierten Dehnung bzw. Zugspannungen zu erzielen, ist es bevorzugt vorgesehen, dass diese Temperatur mehr als 70°C beträgt.

Bei Verwendung einer Klebeverbindung an einem warmaushärtenden Klebstoff ist es demgegenüber bevorzugt vorgesehen, dass die Temperatur zwischen 70°C und 170°C beträgt.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine stark vereinfachte, teilweise geschnittene Seitenansicht eines erfindungsgemäßen Kraftstoffinjektors,
- Fig. 2: eine Draufsicht auf den Kraftstoffinjektor im Bereich eines Sensorelements und
- Fig. 3: einen Schnitt in der Ebene III - III der Fig. 2.

Gleiche Elemente bzw. Elemente mit gleicher Funktion sind in den Figuren mit den gleichen Bezugsziffern versehen.

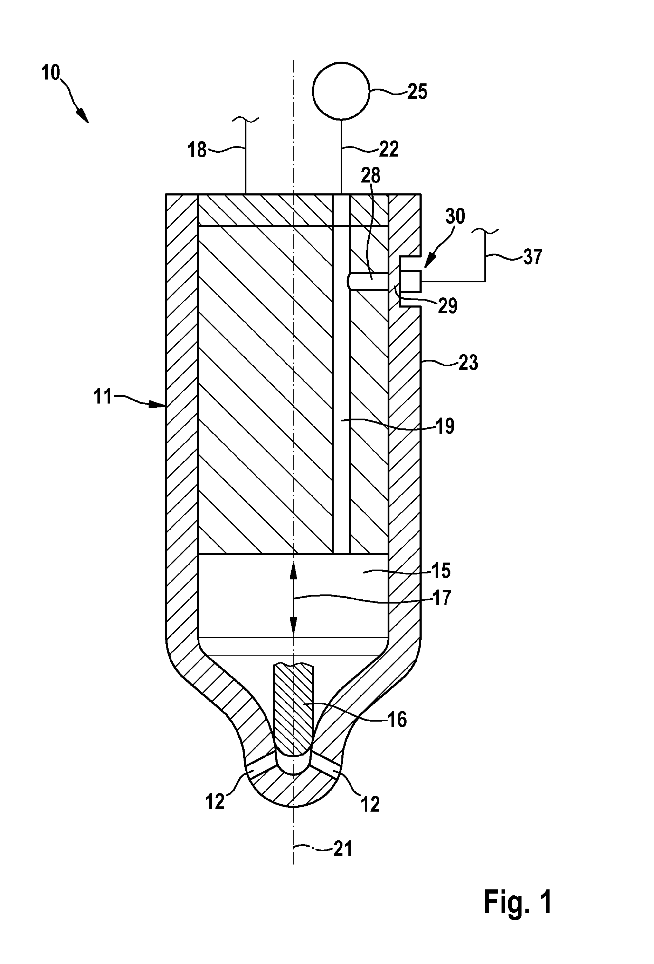

Der in der Fig. 1 stark vereinfacht dargestellte Kraftstoffinjektor 10 ist als sogenannter Common-Rail-Injektor ausgebildet, und dient dem Einspritzen von Kraftstoff in den nicht gezeigten Brennraum einer Brennkraftmaschine, insbesondere einer selbstzündenden Brennkraftmaschine.

Der Kraftstoffinjektor 10 weist ein im Wesentlichen aus Metall bestehendes, ggf. mehrteilig ausgebildetes Injektorgehäuse 11 auf, in dem auf der dem Brennraum der Brennkraftmaschine zugewandten Seite wenigstens eine, vorzugsweise mehrere Einspritzöffnungen 12 zum Einspritzen des Kraftstoffs angeordnet sind. Innerhalb des Injektorgehäuses 11 bildet dieses einen Hochruckraum 15 aus, in dem eine als Einspritzglied dienende Düsennadel 16 in Richtung des Doppelpfeils 17 hubbeweglich angeordnet ist. In der dargestellten, abgesenkten Stellung der Düsennadel 16 bildet diese zusammen mit der Innenwand des Hochdruckraums 15 bzw. des Injektorgehäuses 11 einen Dichtsitz aus, so dass die Einspritzöffnungen 12 zumindest mittelbar verschlossen sind, derart, dass das Einspritzen von Kraftstoff aus dem Hochdruckraum 15 in den Brennraum der Brennkraftmaschine vermieden wird. In der anderen, nicht dargestellten, von dem Dichtsitz abgehobenen Position der Düsennadel 16 gibt diese die Einspritzöffnungen 12 zum Einspritzen des Kraftstoffs in den Brennraum der Brennkraftmaschine frei. Die Bewegung der Düsennadel 16, insbesondere zum Freigeben der Einspritzöffnungen 12, erfolgt auf eine an sich bekannte Art und Weise mittels eines nicht dargestellten Aktuators, der über eine Spannungsversorgungsleitung 18 von einer Steuereinrichtung der Brennkraftmaschine ansteuerbar ist. Bei dem Aktuator kann es sich insbesondere um einen Magnetaktuator oder aber um einen Piezoaktuator handeln.

Die Versorgung des Hochdruckraums 15 mit unter Hochdruck (Systemdruck) stehendem Kraftstoff erfolgt über eine innerhalb des Injektorgehäuses 11 angeordnete bzw. in Bauteilen des Kraftstoffinjektors 10 ausgebildete Versorgungsbohrung 19, die insbesondere exzentrisch zur Längsachse 21 des Injektorgehäuses 11 in einem Randbereich des Kraftstoffinjektors 10, zumindest im Wesentlichen parallel zur Längsachse 21, verläuft. Die Versorgungsbohrung 19 ist darüber hinaus über einen nicht dargestellten Kraftstoffanschlussstutzen mit einer Kraftstoffleitung 22 verbunden, welche wiederum mit einem Kraftstoffspeicher 25 (Rail) gekoppelt ist.

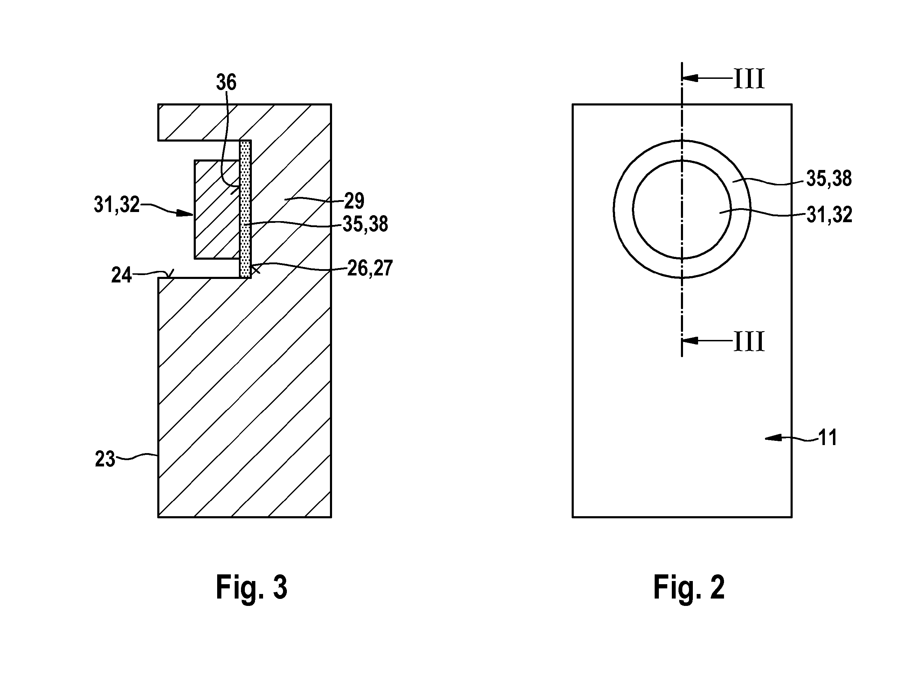

In einem von den Einspritzöffnungen 12 bzw. dem Brennraum axial relativ weit beabstandeten Bereich des Injektorgehäuses 11 ist in dessen Außenwand 23 beispielhaft eine sacklochförmige Vertiefung 24 ausgebildet (Fig. 3), so dass die Wanddicke des Injektorgehäuses 11 im Bereich der Vertiefung 24 reduziert ist. Ergänzend wird erwähnt, dass anstelle einer sacklochförmigen Vertiefung 24 das Injektorgehäuse 11 auch eine Abflachung aufweisen kann, in deren Bereich die Wanddicke des Injektorgehäuses 11 reduziert ist.

Der vorzugsweise eben ausgebildete Grund 26 der Vertiefung 24 bildet einen Teil eines Verformungsbereichs 27 aus. Auf der der Vertiefung 24 abgewandten Seite des Injektorgehäuses 11 ist das Injektorgehäuse 11 beispielhaft in Wirkverbindung mit einem Abzweig 28 angeordnet, der wiederum in der Versorgungsbohrung 19 mündet. Dadurch wirkt der in der Versorgungsbohrung 19 augenblicklich herrschende Kraftstoffdruck auch in dem Injektorgehäuse 11 auf der der Vertiefung 24 abgewandten Seite. Dadurch, dass die Wanddicke des Injektorgehäuses 11 im Bereich der Vertiefung 24 reduziert ist, wirkt der Wandabschnitt 29 des Injektorgehäuses 11 auf der der Vertiefung 24 zugewandten Seite als Verformungsbereich 27 in Art einer elastisch verformbaren Membran, wobei die Verformung, welche sich als Wölbung ausbildet, umso größer ist, je höher der augenblickliche Kraftstoffdruck in der Versorgungsbohrung 19 bzw. dem Abzweig 28 ist.

Zur Detektion des zeitlichen Verlaufs des Kraftstoffdrucks in dem Abzweig 28 bzw. der Versorgungsbohrung 19 und damit auch in dem Hochdruckraum 15, welcher als Indiz für die augenblickliche Stellung der Düsennadel 16 zur Ansteuerung der Düsennadel 16 verwendet wird, weist der Kraftstoffinjektor 10 eine Messeinrichtung 30 auf. Die Messeinrichtung 30 hat ein beispielhaft als Piezoelement 31 ausgebildetes Sensorelement 32. Das Sensorelement 32 ist über eine in den Fig. 2 und 3 erkennbare stoffschlüssige Verbindung 35 im Bereich des Grunds 26 der Aussparung 23 mit dem Injektorgehäuse 11 verbunden. Das Sensorelement 32 weist auf der dem Verformungsbereich 27 zugewandten Seite eine ebene Verbindungsfläche 36 auf. Darüber hinaus ist das im Querschnitt zumindest in etwa kreisförmige Sensorelement 32 über eine lediglich in der Fig. 1 dargestellte Kabelverbindung 37 mit einer Auswerteeinrichtung oder einem Auswertealgorithmus verbunden, welcher jedoch ggf. auch direkt an dem Sensorelement 32 bzw. der Messeinrichtung 30 selbst angeordnet sein kann.

In Abhängigkeit des in der Versorgungsbohrung 19 bzw. dem Abzweig 28 herrschenden Kraftstoffdrucks wölbt sich der Verformungsbereich 27 im Bereich des Piezoelements 31 nach außen, wobei durch die zumindest im Wesentlichen als starr anzunehmende stoffschlüssige Verbindung 35 zwischen dem Verformungsbereich 27 und dem Piezoelement 31 in dem Piezoelement 31 in Abhängigkeit der Höhe der Dehnungen bzw. Zugspannungen in dem Verformungsbereich 27 elektrische Spannungen erzeugt werden, die mittelbar zur Bestimmung der Position der Düsennadel 16 dienen. Bei dem in den Figuren dargestellten Ausführungsbeispiel ist die stoffschlüssige Verbindung 35 als Klebeverbindung 38 unter Verwendung eines warmaushärtenden Klebstoffs ausgebildet. Es liegt jedoch im Rahmen der Erfindung, dass die stoffschlüssige Verbindung 35 alternativ als Löt- oder Schweißverbindung ausgebildet ist.

Erfindungsgemäß ist es vorgesehen, dass bei der Ausbildung der stoffschlüssigen Verbindung 35 zwischen dem Injektorgehäuse 11 und dem Sensorelement 32, d.h. während des Fertigungsprozesses des Kraftstoffinjektors 10, die beiden Fügepartner, d.h. das Injektorgehäuse 11 und das Sensorelement 32 zumindest partiell, vorzugsweise jedoch vollständig auf eine über der Raumtemperatur liegenden Temperatur erwärmt werden. Diese Temperatur beträgt dabei wenigstens 70°, bei Verwendung eines warmaushärtenden Klebstoffs vorzugsweise zwischen 70°C und 170°C. Die Erwärmung findet zumindest im Verformungsbereich 27 des Injektorgehäuses 11 sowie an der dem Verformungsbereich 27 zugewandten Verbindungsfläche 36 des Sensorelements 32 statt.

Nach dem Ausbilden der stoffschlüssigen Verbindung 35 schrumpfen die an der stoffschlüssigen Verbindung 35 teilnehmenden Fügepartner beim Abkühlen, so dass in dem Sensorelement 32 bzw. dem Piezoelement 31 Druckspannungen erzeugt werden. Diese reduzieren während des eigentlichen Betriebs des Kraftstoffinjektors 10 insbesondere bei gegenüber der Umgebungstemperatur erhöhter Betriebstemperatur die maximal auftretenden Dehnungen bzw. Zugspannungen in dem Piezoelement 31 bzw. im Sensorelement 32.

Der soweit beschriebene Kraftstoffinjektor 10 kann in vielfältiger Art und Weise abgewandelt bzw. modifiziert werden, ohne vom Erfindungsgedanken abzuweichen.

## Patentansprüche

1. Kraftstoffinjektor (10), insbesondere Common-Rail-Injektor, mit einem Injektorgehäuse (11), in dem ein Hochdruckraum (15) ausgebildet ist, der über eine im Injektorgehäuse (11) angeordnete Versorgungsbohrung (19) mit unter Druck stehendem Kraftstoff versorgbar ist, mit wenigstens einer zumindest mittelbar mit dem Hochdruckraum (15) verbundenen, im Injektorgehäuse (11) ausgebildeten Einspritzöffnung (12) zum Einspritzen von Kraftstoff in den Brennraum einer Brennkraftmaschine, mit einem die wenigstens eine Einspritzöffnung (12) freigebenden oder verschließenden Einspritzglied (16), und mit einer Messeinrichtung (30) zur zumindest mittelbaren Erfassung des Drucks im Hochdruckraum (15) oder der Versorgungsbohrung (19), wobei die Messeinrichtung (30) dazu ausgebildet ist, eine elastische Verformung eines zumindest mittelbar mit der Versorgungsbohrung (19) oder dem Hochdruckraum (15) in Wirkverbindung angeordneten Verformungsbereichs (27) zu erfassen, wobei die Messeinrichtung (30) ein Sensorelement (32) aufweist, das mittels einer stoffschlüssigen Verbindung (35) mit dem Verformungsbereich (27) verbunden ist, und wobei das Sensorelement (32) dazu ausgebildet ist, in dem Verformungsbereich (27) auftretende Zug- oder Druckspannungen zu detektieren,
**dadurch gekennzeichnet,**
**dass** die stoffschlüssige Verbindung (35) dazu ausgebildet ist, dass bei deren Herstellung das Sensorelement (32) zumindest im Bereich einer Verbindungsfläche (36) und der Kraftstoffinjektor (10) zumindest im Verformungsbereich (27) auf eine gegenüber der Umgebungstemperatur erhöhte Temperatur erwärmbar sind.

2. Kraftstoffinjektor nach Anspruch 1,
**dadurch gekennzeichnet,**
**dass** die stoffschlüssige Verbindung (35) als Klebeverbindung (38) unter Verwendung eines warmaushärtenden Klebstoffs ausgebildet ist.

3. Kraftstoffinjektor nach Anspruch 1,
**dadurch gekennzeichnet,**
**dass** die stoffschlüssige Verbindung (35) als Löt- oder Schweißverbindung ausgebildet ist.

4. Kraftstoffinjektor nach einem der Ansprüche 1 bis 3,
**dadurch gekennzeichnet,**
**dass** der Verformungsbereich (26) und das Sensorelement (32) im Bereich der stoffschlüssigen Verbindung (35) jeweils eben ausgebildet sind.

5. Kraftstoffinjektor nach einem der Ansprüche 1 bis 4,
**dadurch gekennzeichnet,**
**dass** der Verformungsbereich (27) im Bereich der Versorgungsbohrung (19) oder eines mit der Versorgungsbohrung (19) in Wirkverbindung angeordneten Abzweigs (28) angeordnet ist.

6. Kraftstoffinjektor nach einem der Ansprüche 1 bis 5,
**dadurch gekennzeichnet,**
**dass** das Sensorelement (32) ein Piezoelement (31) oder zumindest einen Dehnmessstreifen aufweist.

7. Kraftstoffinjektor nach einem der Ansprüche 1 bis 6,
**dadurch gekennzeichnet,**
**dass** der Verformungsbereich (27) im Bereich einer sacklochförmigen Vertiefung (24) des Injektorgehäuses (11) angeordnet ist.

8. Verfahren zum Herstellen eines Kraftstoffinjektors (10), insbesondere eines Kraftstoffinjektors (10) nach einem der Ansprüche 1 bis 7, bei dem ein Injektorgehäuse (11) in einem sich in Abhängigkeit eines Kraftstoffdrucks elastisch verformenden Verformungsbereichs (27) mittels einer stoffschlüssigen Verbindung (35) mit einem Sensorelement (32) verbunden wird, wobei das Sensorelement (32) dazu ausgebildet ist, in dem Verformungsbereich (27) auftretende Zug- oder Druckspannungen zu erfassen,
**dadurch gekennzeichnet,**
**dass** bei der Ausbildung der stoffschlüssigen Verbindung (35) der Kraftstoffinjektor (10) zumindest im Verformungsbereich (27) und das Sensorelement (32) zumindest auf der dem Verformungsbereich (27) zugewandten Seite im Bereich einer Verbindungsfläche (36) vorab auf eine gegenüber der Umgebungstemperatur erhöhte Temperatur erwärmt werden.

9. Verfahren nach Anspruch 8,
**dadurch gekennzeichnet,**
**dass** die Temperatur mehr als 70°C beträgt.

10. Verfahren nach Anspruch 8,
**dadurch gekennzeichnet,**
**dass** die Temperatur bei Ausbildung einer Klebeverbindung (38) mit einem warmaushärtenden Klebstoff zwischen 70°C und 170°C beträgt.
